# EUROPÄISCHE PATENTANMELDUNG

(11) **EP 3 378 307 A1**
(43) Veröffentlichungstag der Anmeldung: **26.09.2018**
(21) Anmeldenummer: 18401030.4
(22) Anmeldetag: 19.03.2018
(51) Int. Cl.: A01M 7/00

(54) **MISCHSYSTEM FÜR EINE LANDWIRTSCHAFTLICHE MASCHINE**

(30) Priorität: 24.03.2017 DE 102017106345
(71) Anmelder: Amazonen-Werke H. Dreyer GmbH & Co. KG, 49205 Hasbergen (DE)
(72) Erfinder: Marggraf, Ulla, 38124 Braunschweig (DE)

(57) **Zusammenfassung**

Die Erfindung betrifft ein Mischsystem (26) für eine landwirtschaftliche Spritzeinrichtung (10), insbesondere für eine Feldspritze, mit einem Mischtank (32), welcher mit einer Trägerflüssigkeit und einem Spritzmittel befüllbar und dazu eingerichtet ist, aus der Trägerflüssigkeit und dem Spritzmittel eine Vormischflüssigkeit zu erzeugen, und einem Speichertank (34), welcher mit dem Mischtank (32) verbunden und dazu eingerichtet ist, die in dem Mischtank (32) erzeugte Vormischflüssigkeit zu bevorraten und zur Erzeugung einer auszubringenden Spritzflüssigkeit in eine fluidleitend mit einer oder mehreren Mischkammern (62a-62l) verbindbare Umlaufleitung (48, 48a-48c) abzugeben.

## Beschreibung

Die Erfindung betrifft ein Mischsystem für eine landwirtschaftliche Spritzeinrichtung nach dem Oberbegriff des Patentanspruchs 1, eine landwirtschaftliche Spritzeinrichtung nach dem Oberbegriff des Patentanspruchs 9 und ein Verfahren zum Steuern einer landwirtschaftlichen Spritzeinrichtung nach dem Oberbegriff des Patentanspruchs 13.

Landwirtschaftliche Spritzeinrichtungen, wie beispielsweise Feldspritzen, weisen üblicherweise ein Mischsystem zur Erzeugung und Bevorratung einer auszubringenden Flüssigkeit auf. Dabei kann das Mischsystem einen Mischtank umfassen, welcher mit einer Trägerflüssigkeit und einem Spritzmittel befüllbar ist.

In der Praxis besteht das Problem, dass die Menge der auszubringenden Flüssigkeit und damit auch die Menge des benötigten Spritzmittels im Vorfeld von Spritzarbeiten nicht exakt bestimmbar sind. Hieraus resultiert häufig der Umstand, dass nach dem Abschluss der Spritzarbeiten mit Spritzmittel versetzte Flüssigkeit in dem Mischtank zurückbleibt. Die Entsorgung dieser Restmenge erfordert regelmäßig einen hohen Arbeits- und Zeitaufwand.

Unter anderem zur Verringerung der zu entsorgenden Restmenge wurden sogenannte Direkteinspeisesysteme entwickelt, bei welchen die Trägerflüssigkeit und das flüssige Spritzmittel erst unmittelbar vor der Spritzdüse vermischt werden. Es hat sich jedoch gezeigt, dass insbesondere bei Spritzeinrichtungen mit einer großen Arbeitsbreite ebenfalls eine erhebliche Menge von konzentriertem Spritzmittel in den Leitungen der Spritzeinrichtung zurückbleibt, wodurch das Problem der Restmengenentsorgung folglich nicht behoben wird.

Darüber hinaus besteht bei bekannten Direkteinspeisesystemen das Problem, dass unterschiedliche Spritzmittel und Einstellungen an der Spritzeinrichtung Pumpen mit unterschiedlichen Fördereigenschaften bedingen. Aus diesem Grund ist der Einsatzbereich bekannter Direkteinspeisesysteme aufgrund des jeweils eingesetzten Pumpentyps auf bestimmte Spritzmittel und Einstellungen an der Spritzeinrichtung beschränkt.

Zur Reduzierung der zu entsorgenden Restmenge bei gleichzeitiger Erweiterung des Einsatzbereichs der landwirtschaftlichen Spritzeinrichtung ist man dazu übergegangen, eine Vormischung aus Trägerflüssigkeit und Spritzmittel zu erzeugen und das gewünschte Mischverhältnis nach Art eines Direkteinspeisesystems durch Einmischen der Vormischung in die Trägerflüssigkeit in dem Bereich der Spritzdüsen herbeizuführen. Da kein konzentriertes Spritzmittel sondern eine Vormischung gefördert wird, wird die zurückbleibende Menge an Spritzmittel reduziert. Ein solches System ist beispielsweise aus der Druckschrift EP 1 932 424 B1 bekannt.

Das beschriebene eine Vormischung erzeugende System hat jedoch den Nachteil, dass eine kontinuierliche Erzeugung der Vormischflüssigkeit erfolgen muss. Kommt es zu Schwankungen bei der Erzeugung der Vormischflüssigkeit, wird das Mischungsverhältnis der auszubringenden Spritzflüssigkeit beeinflusst, wodurch letztendlich nicht ausreichend Wirkstoff ausgebracht wird.

Die der Erfindung zugrunde liegende Aufgabe besteht somit darin, die in landwirtschaftlichen Spritzeinrichtungen zurückbleibende Spritzmittelmenge zu reduzieren, ohne dass hierdurch das Risiko von Mischungsverhältnisschwankungen der auszubringenden Spritzflüssigkeit erhöht wird oder es zu einer Einschränkung des Einsatzbereichs der Spritzeinrichtung aufgrund der verwendeten Fördereinrichtungen kommt.

Die Aufgabe wird gelöst durch ein Mischsystem der eingangs genannten Art, wobei das erfindungsgemäße Mischsystem zusätzlich zu dem Mischtank einen Speichertank umfasst, welcher mit dem Mischtank verbunden und dazu eingerichtet ist, die in dem Mischtank erzeugte Vormischflüssigkeit zu bevorraten und zur Erzeugung einer auszubringenden Spritzflüssigkeit in eine fluidleitend mit einer oder mehreren Mischkammern verbindbare Umlaufleitung abzugeben.

Die Erfindung macht sich die Erkenntnis zunutze, dass durch die Verwendung von zwei miteinander verbundenen Tankeinheiten das Risiko von Schwankungen im Mischungsverhältnis eliminiert oder zumindest erheblich verringert werden kann, da die Mischung und die Bevorratung der Vormischflüssigkeit voneinander entkoppelt werden. Aufgrund der Befüllung des Mischtanks mit der Trägerflüssigkeit und dem Spritzmittel können in dem Mischtank temporär Abweichungen von dem gewünschten Mischungsverhältnis für die Vormischflüssigkeit auftreten. Diese Schwankungen werden aber nicht an die fluidleitend mit der einen oder den mehreren Mischkammern verbindbare Umlaufleitung weitergegeben, da ein Speichertank zur Bevorratung der erzeugten Vormischflüssigkeit zwischengeschaltet ist. Das Mischsystem kann beispielsweise in einem Direkteinspeisesystem einer Spritzeinrichtung eingesetzt werden, sodass die in der Spritzeinrichtung zurückbleibende Spritzmittelmenge reduzieren wird, ohne dass hierdurch das Risiko von Mischungsverhältnisschwankungen der auszubringenden Spritzflüssigkeit erhöht wird. Ferner kann das Mischungsverhältnis der erzeugten und bevorrateten Vormischflüssigkeit an die verwendeten Fördereinrichtungen angepasst werden, sodass es nicht zu einer Einschränkung des Einsatzbereichs der Spritzeinrichtung kommt. Die Trägerflüssigkeit und das Spritzmittel können dem Mischtank getrennt oder gemeinsam zugeführt werden. Das Spritzmittel kann flüssig oder als Feststoff, beispielsweise als Granulat oder Pulver, ausgebildet sein. Das Spritzmittel ist beispielsweise ein Pflanzenschutzmittel und/oder enthält einen oder mehrere Wirkstoffe. Die Trägerflüssigkeit kann beispielsweise Wasser sein.

Eine bevorzugte Ausführungsform des erfindungsgemäßen Mischsystems umfasst eine Mischeinrichtung, welche zumindest abschnittsweise in dem Mischtank angeordnet ist. Durch die Mischeinrichtung wird die Vermischung der Trägerflüssigkeit und des Spritzmittels weiter gefördert, sodass das Risiko von Schwankungen im Mischungsverhältnis der von dem Mischtank an den Speichertank abgegebenen Vormischflüssigkeit weiter verringert wird. Die Mischeinrichtung kann kontinuierlich oder diskontinuierlich betrieben werden. Ferner kann die Mischeinrichtung als passive oder als aktive Mischeinrichtung ausgebildet sein. Außerdem kann die Mischeinrichtung zur Erzeugung einer Vormischflüssigkeit aus der Trägerflüssigkeit und einem flüssigen Spritzmittel oder einem als Feststoff ausgebildeten Spritzmittel ausgebildet sein.

In einer Weiterbildung des erfindungsgemäßen Mischsystems umfasst die Mischeinrichtung eine Injektordüse und/oder ein Venturirohr, wobei der Mischtank vorzugsweise dazu eingerichtet ist, über die Injektordüse und/oder das Venturirohr mit der Trägerflüssigkeit und/oder dem Spritzmittel befüllt zu werden. Durch die Befüllung des Mischtanks kommt es somit direkt zu einer Durchmischung der Trägerflüssigkeit und des Spritzmittels, wodurch unmittelbar nach der Einspritzung der Trägerflüssigkeit und/oder des Spritzmittels eine hohe Durchmischungsrate vorliegt. Alternativ oder zusätzlich kann die Mischeinrichtung ein Rührwerk aufweisen. Das Rührwerk kann rotierend angetriebene Rührelemente, wie beispielsweise Schaufeln, umfassen. Insbesondere wenn das Spritzmittel als Feststoff ausgebildet ist, ist die Verwendung eines Rührwerks vorteilhaft. Durch das Rührwerk wird innerhalb des Mischtanks eines zirkulierende Strömung erzeugt, wodurch die Vermischung der Trägerflüssigkeit mit dem als Feststoff ausgebildeten Spritzmittel begünstigt wird.

In einer anderen Ausführungsform des erfindungsgemäßen Mischsystems ist zwischen dem Mischtank und dem Speichertank ein Befüllventil angeordnet, wobei das Befüllventil vorzugsweise als elektromagnetisch betätigtes Ventil oder als mediumbetätigtes Ventil ausgebildet ist. Wenn das Befüllventil als mediumbetätigtes Ventil ausgebildet ist, ist es bevorzugt, dass es als fremdmediumbetätigtes Pneumatikventil ausgeführt ist. Das Befüllventil ist vorzugsweise als 2/2-Wege Ventil ausgebildet. Der Schaltzustand des Befüllventils kann beispielsweise in Abhängigkeit des Füllstandes des Mischtanks, des Füllstandes des Speichertanks und/oder des momentanen Bedarfs an Vormischflüssigkeit steuerbar sein.

Das erfindungsgemäße Mischsystem wird außerdem dadurch vorteilhaft weitergebildet, dass zwischen dem Mischtank und dem Speichertank, vorzugsweise zwischen dem Befüllventil und dem Speichertank, ein Zwischenmischer, insbesondere ein statischer Zwischenmischer, angeordnet ist.

Vorzugsweise weist der Zwischenmischer eine Vielzahl von gerüstartigen, kreuzweise angeordneten Stegen auf. Die Vielzahl von gerüstartigen, kreuzweise angeordneten Stegen erlaubt auch bei geringer Fließgeschwindigkeit eine turbulente Vermischung der den Zwischenmischer durchströmenden Flüssigkeit. Durch die Verwendung eines statischen Zwischenmischers wird die Steigerung der Vermischungsrate der Trägerflüssigkeit und des Spritzmittels ermöglicht, ohne dass hierfür Energie aufgewendet werden muss. Alternativ kann der Zwischenmischer auch als aktiver Zwischenmischer ausgebildet sein. Durch den Zwischenmischer wird der Durchmischungsgrad der Trägerflüssigkeit und des Spritzmittels während der Strömung vom Mischtank in den Speichertank nochmals erhöht, wodurch die Schwankungen des Mischungsverhältnisses der innerhalb des Speichertanks vorliegenden Vormischflüssigkeit nochmals verringert werden.

In einer bevorzugten Ausführungsform des erfindungsgemäßen Mischsystems ist das Volumen des Speichertanks größer ist als das Volumen des Mischtanks. Da der Mischtank keine Bevorratungsfunktion für die Mischflüssigkeit übernimmt, kann das Volumen des Mischtanks im Vergleich zu dem des Speichertanks geringer sein. Auf diese Weise lässt sich ein platzsparendes Mischsystem realisieren, dessen Funktionalität durch die bauraumsparende Ausbildung nicht beeinträchtigt wird. Vorzugsweise weist der Speichertank ein Volumen in dem Bereich von 25 bis 50 Litern, insbesondere etwa 35 Liter oder 38 Liter, auf. Vorzugsweise weist der Mischtank ein Volumen in dem Bereich von 5 bis 25 Litern, insbesondere etwa 10 Liter oder etwa 20 Liter, auf.

In einer anderen vorteilhaften Ausführungsform umfasst das erfindungsgemäße Mischsystem eine oder mehrere Fördereinrichtungen, welche dazu eingerichtet sind, den Mischtank mit der Trägerflüssigkeit und/oder dem Spritzmittel zu befüllen. Eine oder mehrere Fördereinrichtungen können als Pumpen ausgebildet sein, wobei zum Fördern der Trägerflüssigkeit und zum Fördern des Spritzmittels eine gemeinsame Pumpe oder unterschiedliche Pumpen zum Einsatz kommen können. Wenn das Spritzmittel als Feststoff ausgebildet ist, kann das Mischsystem auch eine Feststoff-Dosiereinrichtung aufweisen, mittels welcher die Zuführmenge des festen Spritzmittels in dem Mischtank gesteuert werden kann. Beispielsweise umfasst die Feststoff-Dosiereinrichtung eine verstellbare Blende, mittels welcher ein durch die Schwerkraft verursachten Einbringen des festen Spritzmittels in den Mischtank gesteuert werden kann.

Außerdem ist ein erfindungsgemäßes Mischsystem bevorzugt, welches eine Steuerungseinrichtung umfasst, welche dazu eingerichtet ist, die Mischeinrichtung, das Befüllventil und/oder die eine oder die mehreren Fördereinrichtungen zu steuern. Insbesondere ist die Steuerungseinrichtung signalleitend mit der Mischeinrichtung, dem Befüllventil und/oder der einen oder den mehreren Fördereinrichtungen verbunden und dazu eingerichtet, die Mischeinrichtung, das Befüllventil und/oder die eine oder die mehreren Fördereinrichtungen in Abhängigkeit einer eingestellten Ausbringmenge und/oder einem eingestellten Mischungsverhältnis der Trägerflüssigkeit und des Spritzmittels für die Vormischflüssigkeit und/oder der auszubringenden Spritzflüssigkeit selbsttätig zu steuern.

Die der Erfindung zugrunde liegende Aufgabe wird ferner durch eine landwirtschaftliche Spritzeinrichtung der eingangs genannten Art gelöst, wobei das Mischsystem der landwirtschaftlichen Spritzeinrichtung nach einer der vorstehend beschriebenen Ausführungsformen ausgebildet und der Speichertank des Mischsystems mit einer oder mehreren Mischkammern verbunden ist, welche dazu eingerichtet sind, aus der Vormischflüssigkeit eine auszubringende Spritzflüssigkeit zu erzeugen. Hinsichtlich der Vorteile und Modifikationen der erfindungsgemäßen landwirtschaftlichen Spritzeinrichtung wird zunächst auf die Vorteile und Modifikationen des erfindungsgemäßen Mischsystemes verwiesen. Die eine oder die mehreren mit dem Speichertrank verbundenen Mischkammern können beispielsweise als Leitungsabschnitt ausgebildet sein, in welchen die Vormischflüssigkeit und eine weitere Flüssigkeit, beispielsweise die Trägerflüssigkeit, gemeinsam einströmen. Alternativ kann die eine oder können die mehreren Mischkammern auch ein gegenüber den übrigen Leitungsabschnitten der Spritzeinrichtung größeren oder kleineren Querschnitt aufweisen und/oder einen Mischeinsatz aufweisen, welcher die Durchmischung der Vormischflüssigkeit und der weiteren Flüssigkeit fördert. Die eine oder die mehreren Mischkammern sind vorzugsweise jeweils mit einer oder mehreren Spritzdüsen verbunden.

Eine vorteilhafte Weiterbildung der erfindungsgemäßen landwirtschaftlichen Spritzeinrichtung umfasst eine Umlaufleitung, welche mit dem Speichertank des Mischsystems verbunden ist, wobei der Speichertank dazu eingerichtet ist, Vormischflüssigkeit in die Umlaufleitung abzugeben und über die Umlaufleitung mit Vormischflüssigkeit befüllt zu werden. Somit ergibt sich eine kontinuierliche Zirkulation von Vormischflüssigkeit durch die Umlaufleitung und den Speichertank, sodass in der Umlaufleitung stets Vormischflüssigkeit zum Einleiten in eine oder mehrere Mischkammern zum Erzeugen der auszubringenden Spritzflüssigkeit bereit steht. Vorzugsweise weist die erfindungsgemäße landwirtschaftliche Spritzeinrichtung eine oder mehrere Fördereinrichtungen, insbesondere Pumpen, auf, welche entlang der Umlaufleitung angeordnet sind. Insbesondere erzeugt die eine oder erzeugen die mehreren Fördereinrichtungen die kontinuierliche Zirkulation von Vormischflüssigkeit durch die Umlaufleitung und den Speichertank. Zwischen der Umlaufleitung und der einen und den mehreren Mischkammern ist vorzugsweise jeweils ein Ventil angeordnet, welches dazu eingerichtet ist, die Fluidverbindung zwischen der Umlaufleitung und der jeweiligen Mischkammer zu sperren und freizugeben. Durch das eine oder die mehreren Ventile kann somit die Einleitung der Vormischflüssigkeit in die eine oder die mehreren Mischkammern initiiert und unterbrochen werden.

Außerdem ist eine erfindungsgemäße landwirtschaftliche Spritzeinrichtung bevorzugt, bei welcher der Mischtank, insbesondere über die Mischeinrichtung, mit einem Spritzmittelbehälter und/oder einem Trägerflüssigkeitsbehälter verbunden ist. Der Spritzmittelbehälter und/oder der Trägerflüssigkeitsbehälter sind durch einen Bediener befüllbar. Vorzugsweise weist die landwirtschaftliche Spritzeinrichtung hierzu eine oder mehrere Anschlusseinrichtungen auf, welche mit einer Spritzmittelversorgung und/oder einer Trägerflüssigkeitsversorgung verbindbar sind. Der Spritzmittelbehälter und/oder der Trägerflüssigkeitsbehälter können auch direkt von außen zugänglich ausgebildet sein. Hierdurch kann insbesondere die manuelle Befüllung des Spritzmittelbehälters mit Spritzmittel aus einem portablen Behälter, wie etwa einem Kanister, erheblich vereinfacht werden. Alternativ oder zusätzlich zu dem Spritzmittelbehälter und/oder dem Trägerflüssigkeitsbehälter kann die landwirtschaftliche Spritzeinrichtung jeweils ein Befüllsystem aufweisen, welches derart mit einem portablen Behälter, insbesondere einem Kanister, verbindbar ist, dass der mit dem Befüllsystem verbundene portable Behälter als Spritzmittelbehälter oder als Trägerflüssigkeitsbehälter dient.

In einer weiteren Ausführungsform der erfindungsgemäßen landwirtschaftlichen Spritzeinrichtung ist die eine oder sind die mehreren Mischkammern dazu eingerichtet, die auszubringende Spritzflüssigkeit aus der Vormischflüssigkeit und der Trägerflüssigkeit zu erzeugen. Hierzu ist die eine oder sind die mehreren Mischkammern vorzugsweise mit der Umlaufleitung und dem Trägerflüssigkeitsbehälter verbunden. Die Vormischflüssigkeit kann in der einen oder den mehreren Mischkammern vor der Weiterleitung an die ein oder die mehreren Spritzdüsen durch eine erneute Vermischung mit der Trägerflüssigkeit auf die gewünschte Zusammensetzung der auszubringenden Spritzflüssigkeit gebracht werden.

Die der Erfindung zugrunde liegende Aufgabe wird außerdem durch ein Verfahren der eingangs genannten Art gelöst, wobei die in dem Mischtank erzeugte Vormischflüssigkeit in einem mit dem Mischtank verbundenen Speichertank bevorratet wird. Hinsichtlich der Vorteile und Modifikationen des erfindungsgemäßen Verfahrens wird zunächst auf die Vorteile und Modifikationen des erfindungsgemäßen Mischsystemes und der erfindungsgemäßen landwirtschaftlichen Spritzeinrichtung verwiesen.

In einer besonders bevorzugten Ausführungsform des erfindungsgemäßen Verfahrens wird die in dem Speichertank bevorratete Vormischflüssigkeit in eine fluidleitend mit einer oder mehreren Mischkammern verbindbare Umlaufleitung abgegeben, eine Zirkulation der Vormischflüssigkeit innerhalb der Umlaufleitung erzeugt und/oder der Speichertank mit der Vormischflüssigkeit aus der Umlaufleitung befüllt. Durch die Zirkulation der Vormischflüssigkeit durch die Umlaufleitung und den Speichertank steht in der Umlaufleitung stets Vormischflüssigkeit zum Einleiten in eine oder mehrere Mischkammern zum Erzeugen der auszubringenden Spritzflüssigkeit bereit. Vorzugsweise umfasst das Verfahren das Sperren und/oder Freigeben der Fluidverbindung zwischen der Umlaufleitung und der einen und den mehreren Mischkammern mittels eines oder mehrerer Ventile. Durch das eine oder die mehreren Ventile kann somit die Einleitung der Vormischflüssigkeit in die eine oder die mehreren Mischkammern initiiert und unterbrochen werden.

Das erfindungsgemäße Verfahren wird ferner dadurch vorteilhaft weitergebildet, dass die Trägerflüssigkeit und/oder das Spritzmittel durch ein Venturirohr geleitet und/oder die Trägerflüssigkeit und/oder das Spritzmittel in den Mischtank mittels einer Injektordüse eingespritzt wird. Durch das Einspritzen der Trägerflüssigkeit und/oder des Spritzmittels in den Mischtank mittels der Injektordüse kommt es somit direkt zu einer Durchmischung der Trägerflüssigkeit und des Spritzmittels, wodurch unmittelbar nach dem Einspritzen der Trägerflüssigkeit und/oder des Spritzmittels eine hohe Durchmischungsrate vorliegt.

In einer anderen Ausführungsform des erfindungsgemäßen Verfahrens wird die Fluidverbindung zwischen dem Mischtank und dem Speichertank mittels eines zwischen dem Mischtank und dem Speichertank angeordneten Befüllventils gesperrt, die Fluidverbindung zwischen dem Mischtank und dem Speichertank mittels des zwischen dem Mischtank und dem Speichertank angeordneten Befüllventils freigegeben und/oder die von dem Mischtank zu dem Speichertank fließende Vormischflüssigkeit mittels eines Zwischenmischers durchmischt. Durch das Sperren und Freigeben des zwischen dem Mischtank und dem Speichertank angeordneten Befüllventils kann der Speichertank bedarfsgerecht und situationsadäquat mit Vormischflüssigkeit aus dem Mischtank aufgefüllt werden. Die Zwischenmischung erhöht nochmals den Durchmischungsgrad der Vormischflüssigkeit in dem Speichertank.

In einer Weiterbildung des erfindungsgemäßen Verfahrens wird Trägerflüssigkeit von einem Trägerflüssigkeitsbehälter in den Mischtank gefördert und/oder Spritzmittel von einem Spritzmittelbehälter in den Mischtank gefördert. Das Fördern der Trägerflüssigkeit von dem Trägerflüssigkeitsbehälter in den Mischtank und das Fördern des Spritzmittels von dem Spritzmittelbehälter in den Mischtank kann zumindest abschnittsweise über eine gemeinsame Leitung und/oder unter Verwendung einer gemeinsamen und/oder mehrerer separater Fördereinrichtungen, insbesondere Pumpen, erfolgen.

In einer anderen vorteilhaften Ausführungsform des erfindungsgemäßen Verfahrens wird die Vormischflüssigkeit in eine vor der einen oder den mehreren Spritzdüsen angeordnete Mischkammer eingeleitet, die Trägerflüssigkeit in die vor der einen oder den mehreren Spritzdüsen angeordnete Mischkammer eingeleitet und/oder die auszubringende Spritzflüssigkeit aus der Vormischflüssigkeit und der Trägerflüssigkeit innerhalb der Mischkammer erzeugt. In der Mischkammer kann beispielsweise die auszubringende Spritzflüssigkeit für eine Gruppe von Spritzdüsen erzeugt werden, wobei die Gruppe von Spritzdüsen beispielsweise an einem Segment der landwirtschaftlichen Spritzeinrichtung angeordnet ist.

Weitere Einzelheiten der Erfindung sind der Figurenbeschreibung und den Zeichnungen zu entnehmen. Es zeigen
- Fig. 1: ein Ausführungsbeispiel der erfindungsgemäßen landwirtschaftlichen Spritzeinrichtung in einer perspektivischen Darstellung;
- Fig. 2: ein Ausführungsbeispiel des erfindungsgemäßes Mischsystems in einer schematischen Darstellung;
- Fig. 3: die Integration eines erfindungsgemäßen Mischsystems in das Leitungssystem einer erfindungsgemäßen landwirtschaftlichen Spritzeinrichtung in einer schematischen Darstellung; und
- Fig. 4: die Integration eines erfindungsgemäßen Mischsystems in das Leitungssystem einer erfindungsgemäßen landwirtschaftlichen Spritzeinrichtung in einer schematischen Darstellung.

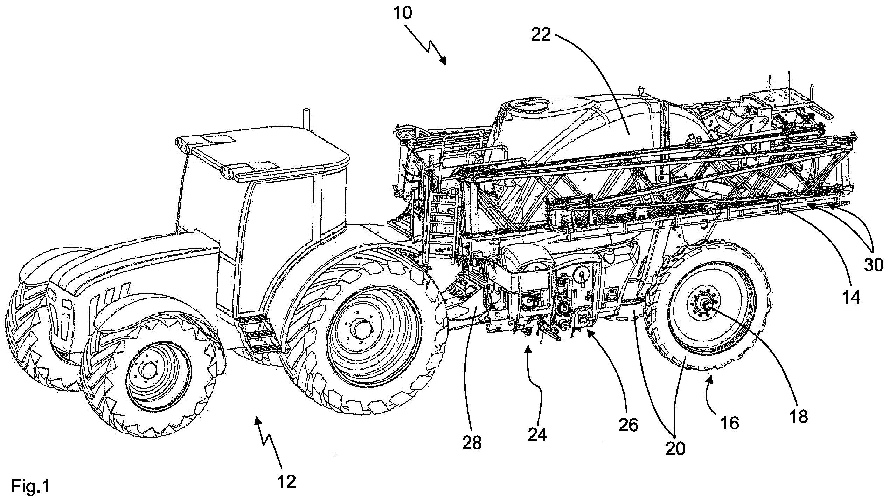

Die Fig. 1 zeigt eine als Feldspritze ausgebildete landwirtschaftliche Spritzeinrichtung 10, welche von einem als Traktor ausgebildeten Zugfahrzeug 12 gezogen wird.

Die landwirtschaftliche Spritzeinrichtung 10 weist ein Spritzgestänge 14 auf, welches mehrere zueinander verschwenkbare Gestängeabschnitte aufweist. In dem dargestellten Zustand befindet sich das Spritzgestänge 14 in einer Transportstellung, sodass die landwirtschaftliche Spritzeinrichtung 10 die zulässige Transtransportbreite nicht überschreitet. Durch ein Verschwenken der Gestängeabschnitte lassen sich diese im Wesentlichen quer zur Fahrtrichtung der landwirtschaftlichen Spritzeinrichtung 10 ausrichten, sodass sich Arbeitsbreiten von beispielsweise 15 bis 40 Meter realisieren lassen. Außerdem weist die landwirtschaftliche Spritzeinrichtung 10 ein Fahrwerk 16 auf, welches eine Achse 18 und zwei Räder 20 aufweist.

Auf dem Rahmen 28 der landwirtschaftlichen Spritzeinrichtung 10 sind ein Trägerflüssigkeitsbehälter 22 und ein Spritzmittelbehälter 24 angeordnet, wobei der Trägerflüssigkeitsbehälter 22 und der Spritzmittelbehälter 24 mit einem Mischsystem 26 verbunden sind. In dem Trägerflüssigkeitsbehälter 22 befindet sich eine als Wasser ausgebildete Trägerflüssigkeit. In dem Spritzmittelbehälter 24 befindet sich ein als flüssiges Pflanzenschutzmittel ausgebildetes Spritzmittel.

In dem Mischsystem 26 wird eine Vormischflüssigkeit aus Trägerflüssigkeit und Spritzmittel erzeugt und bevorratet, welches vor dem Ausbringen mittels der an dem Spritzgestänge 14 angeordneten Spritzdüsen 30 nochmals mit der Trägerflüssigkeit zu einer auszubringenden Spritzflüssigkeit vermischt wird. Das Erzeugen der auszubringenden Spritzflüssigkeit erfolgt in einer oder mehreren den Spritzdüsen 30 vorgeschalteten Mischkammern (nicht dargestellt). In die eine oder die mehreren Mischkammern strömt die Vormischflüssigkeit und die Trägerflüssigkeit ein, wobei in der einen oder den mehreren Mischkammern aus der Trägerflüssigkeit und der Vormischflüssigkeit die auszubringende Spritzflüssigkeit gemischt wird. Hierdurch liegt an den Spritzdüsen 30 unabhängig von dem verwendeten Düsentyp stets eine homogen durchmischte auszubringende Spritzflüssigkeit an. Alternativ oder zusätzlich können Spritzdüsen eingesetzt werden, die jeweils eine eigene Mischkammer vor dem Düsenkopf aufweisen.

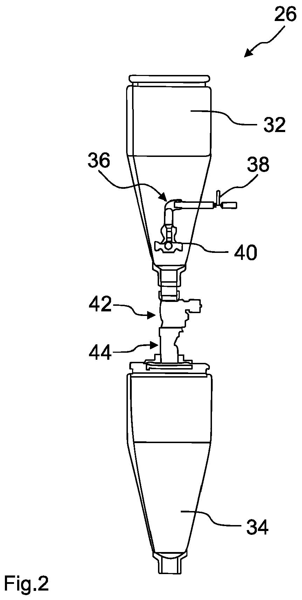

Die Fig. 2 zeigt ein Mischsystem 26, welches beispielsweise als Mischsystem 26 in dem in der Fig. 1 gezeigten landwirtschaftlichen Spritzeinrichtung 10 zum Einsatz kommen kann.

Das Mischsystem 26 umfasst einen Mischtank 32 und einen mit dem Mischtank 32 verbundenen Speichertank 34.

Der Mischtank 32 ist mit einer Trägerflüssigkeit und einem Spritzmittel befüllbar und dazu eingerichtet, aus der Trägerflüssigkeit und dem Spritzmittel eine Vormischflüssigkeit zu erzeugen. Hierzu weist das Mischsystem 26 eine Mischeinrichtung 36 auf, welche abschnittsweise in dem Mischtank 32 angeordnet ist. Die Mischeinrichtung 36 umfasst eine innerhalb des Mischtanks 32 angeordnete Injektordüse 40 und ein mit der Injektordüse 40 verbundenes Venturirohr 38. Der Mischtank 32 wird über die Injektordüse 40 und das Venturirohr 38 mit der Trägerflüssigkeit und dem Spritzmittel befüllt.

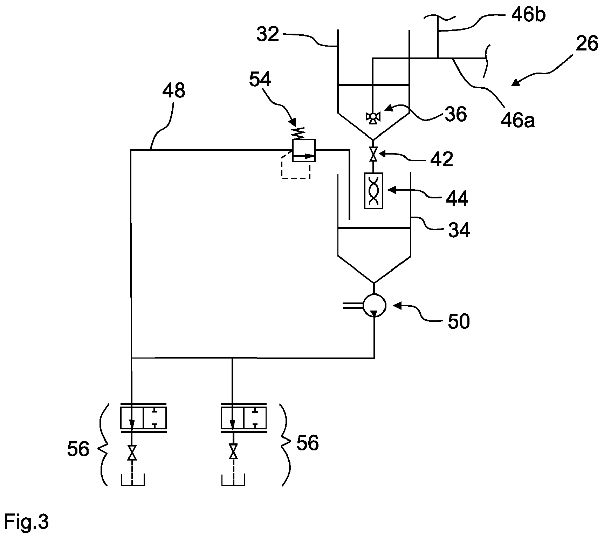

Der Speichertank 34 ist dazu eingerichtet, die in dem Mischtank 32 erzeugte Vormischflüssigkeit zu bevorraten und zur Erzeugung einer auszubringenden Spritzflüssigkeit in eine Umlaufleitung 48 (siehe Fig. 3) abzugeben. Das Volumen des Speichertanks 34 ist größer als das Volumen des Mischtanks 32.

Zwischen dem Mischtank 32 und dem Speichertank 34 ist ein Befüllventil 42 angeordnet. Außerdem ist zwischen dem Befüllventil 42 und dem Speichertank 34 ein Zwischenmischer 44 angeordnet.

Das Befüllventil 42 ist als elektromagnetisch betätigtes 2/2-Wege Ventil ausgebildet. Der Zwischenmischer 44 ist als statischer Zwischenmischer 44 ausgebildet und umfasst eine Vielzahl von gerüstartigen, kreuzweise angeordneten Stegen. Die Mischeinrichtung 36 und das Befüllventil 42 sind mit einer Steuerungseinrichtung verbunden, welche dazu eingerichtet ist, die Mischeinrichtung 36 und das Befüllventil 42 zu steuern.

In der Fig.3 ist dargestellt, dass der Speichertank 34 des Mischsystems 26 mit einer Umlaufleitung 48 verbunden ist, wobei der Speichertank 34 dazu eingerichtet ist, Vormischflüssigkeit in die Umlaufleitung 48 abzugeben und über die Umlaufleitung 48 mit Vormischflüssigkeit befüllt zu werden. Somit stellt sich eine kontinuierliche Zirkulation von Vormischflüssigkeit durch die Umlaufleitung 48 und den Speichertank 34 ein.

Entlang der Umlaufleitung 48 sind außerdem eine Pumpe 50, und ein Druckfolgeventil 54 angeordnet. Die Umlaufleitung 48 ist über Schaltsysteme 56 mit mehreren Mischkammern (nicht dargestellt) verbunden, welche dazu eingerichtet sind, aus der Vormischflüssigkeit eine auszubringende Spritzflüssigkeit zu erzeugen. Die Schaltsysteme 56 umfassen jeweils ein Proportionalventil und ein Absperrventil.

Die Trägerflüssigkeit und das Spritzmittel strömen über die Zuläufe 46a, 46b in die Mischeinrichtung 36 ein.

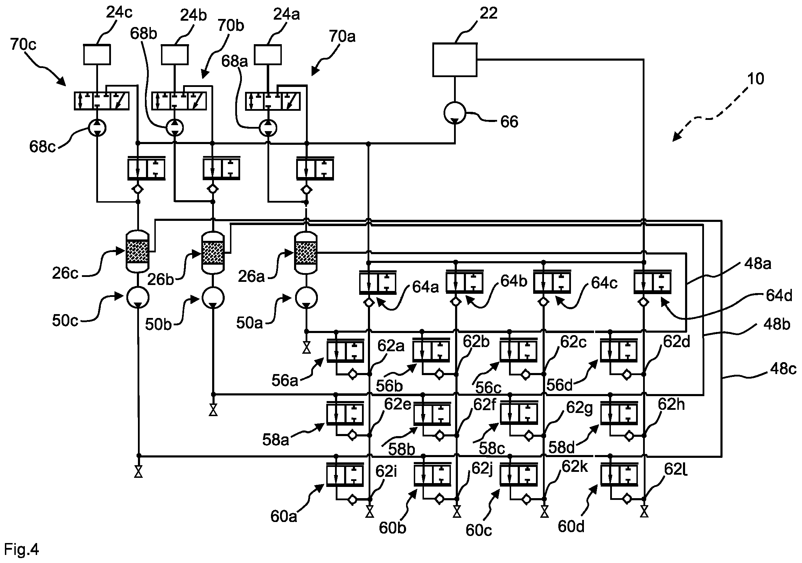

Die Fig. 4 zeigt ein Leitungssystem einer landwirtschaftlichen Spritzeinrichtung 10, welche das Erzeugen und Bevorraten von drei unterschiedlichen Vormischflüssigkeiten erlaubt. Hierzu werden drei Mischsysteme 26a-26c verwendet.

Das Mischsystem 26a ist dazu eingerichtet, eine erste Vormischflüssigkeit aus einer Trägerflüssigkeit, welche in dem Trägerflüssigkeitsbehälter 22 vorgehalten wird, und einem ersten Spritzmittel, welches in dem Spritzmittelbehälter 24a vorgehalten wird, zu erzeugen und zu bevorraten. Das Mischsystem 26b ist dazu eingerichtet, eine zweite Vormischflüssigkeit aus der Trägerflüssigkeit, welche in dem Trägerflüssigkeitsbehälter 22 vorgehalten wird, und einem zweiten Spritzmittel, welches in dem Spritzmittelbehälter 24b vorgehalten wird, zu erzeugen und zu bevorraten. Das Mischsystem 26c ist dazu eingerichtet, eine dritte Vormischflüssigkeit aus der Trägerflüssigkeit, welche in dem Trägerflüssigkeitsbehälter 22 vorgehalten wird, und einem dritten Spritzmittel, welches in dem Spritzmittelbehälter 24c vorgehalten wird, zu erzeugen und zu bevorraten.

Der Speichertank des Mischsystems 26a ist mit der Umlaufleitung 48a verbunden. Die Umlaufleitung 48a weist eine Pumpe 50a auf und ist über die vier Schaltsysteme 56a-56d mit den Mischkammern 62a-62d verbunden, wobei die Mischkammern 62a-62d gleichzeitig über die Schaltsysteme 64a-64d mit dem Trägerflüssigkeitsbehälter 22 verbunden sind, sodass in den Mischkammern 62a-62d aus der Trägerflüssigkeit und der ersten Vormischflüssigkeit eine auszubringende Spritzflüssigkeit erzeugt werden kann. Der Speichertank des Mischsystems 26b ist mit der Umlaufleitung 48b verbunden. Die Umlaufleitung 48b weist eine Pumpe 50b auf und ist über die vier Schaltsysteme 58a-58d mit den Mischkammern 62e-62h verbunden, wobei die Mischkammern 62e-62h gleichzeitig über die Schaltsysteme 64a-64d mit dem Trägerflüssigkeitsbehälter 22 verbunden sind, sodass in den Mischkammern 62e-62h aus der Trägerflüssigkeit und der zweiten Vormischflüssigkeit eine auszubringende Spritzflüssigkeit erzeugt werden kann. Optional kann die in die Mischkammern 62e-62h einströmende Trägerflüssigkeit bereits in den Mischkammern 62a-62d mit der ersten Vormischflüssigkeit gemischt worden sein. Der Speichertank des Mischsystems 26c ist mit der Umlaufleitung 48c verbunden. Die Umlaufleitung 48c weist eine Pumpe 50c auf und ist über die vier Schaltsysteme 60a-60d mit den Mischkammern 62i-62l verbunden, wobei die Mischkammern 62i-62l gleichzeitig über die Schaltsysteme 64a-64d mit dem Trägerflüssigkeitsbehälter 22 verbunden sind, sodass in den Mischkammern 62i-62l aus der Trägerflüssigkeit und der dritten Vormischflüssigkeit eine auszubringende Spritzflüssigkeit erzeugt werden kann. Optional kann die in die Mischkammern 62i-62l einströmende Trägerflüssigkeit bereits in den Mischkammern 62a-62d mit der ersten Vormischflüssigkeit und/der in den Mischkammern 62e-62h mit der zweiten Vormischflüssigkeit gemischt worden sein.

Die Mischkammern 62a-62l sind als Leitungsabschnitte ausgebildet, in welche die jeweilige Vormischflüssigkeit und die Trägerflüssigkeit gemeinsam einströmen. Die Schaltsysteme 56a-56d, 58a-58d, 60a-60d sind dazu eingerichtet, die Fluidverbindung zwischen der jeweiligen Umlaufleitung 48a-48c und den entsprechenden Mischkammern 62a-62l zu sperren und freizugeben. Die Schaltsysteme 64a-64d sind dazu eingerichtet, die Fluidverbindung zwischen dem Trägerflüssigkeitsbehälter 22 und den entsprechenden Mischkammern 62a-62l zu sperren und freizugeben. Die Mischkammern 62a-62l sind jeweils mit mehreren Spritzdüsen (nicht dargestellt) verbunden.

Die Trägerflüssigkeit wird über die Fördereinrichtung 66 gefördert. Das erste Spritzmittel wird über die Fördereinrichtung 68a gefördert, welche Bestandteil der Dosiereinheit 70a ist. Das zweite Spritzmittel wird über die Fördereinrichtung 68b gefördert, welche Bestandteil der Dosiereinheit 70b ist. Das dritte Spritzmittel wird über die Fördereinrichtung 68c gefördert, welche Bestandteil der Dosiereinheit 70c ist.

### Bezugszeichenliste

- 10: landwirtschaftliche Spritzeinrichtung
- 12: Zugfahrzeug
- 14: Spritzgestänge
- 16: Fahrwerk
- 18: Achse
- 20: Räder
- 22: Trägerflüssigkeitsbehälter
- 24, 24a-24c: Spritzmittelbehälter
- 26, 26a-26c: Mischsystem
- 28: Rahmen
- 30: Spritzdüsen
- 32: Mischtank
- 34: Speichertank
- 36: Mischeinrichtung
- 38: Venturirohr
- 40: Injektordüse
- 42: Befüllventil
- 44: Zwischenmischer
- 46a, 46b: Zuläufe
- 48, 48a-48c: Umlaufleitung
- 50, 50a-50c: Pumpe
- 54: Druckfolgeventil
- 56, 56a-56d: Schaltsysteme
- 58a-58d: Schaltsysteme
- 60a-60d: Schaltsysteme
- 62a-62l: Mischkammern
- 64a-64d: Schaltsysteme

- 66: Fördereinrichtung
- 68a-66c: Fördereinrichtungen
- 70a-70c: Dosiereinheiten

## Patentansprüche

1. Mischsystem (26, 26a-26c) für eine landwirtschaftliche Spritzeinrichtung (10), insbesondere für eine Feldspritze, mit
- einem Mischtank (32), welcher mit einer Trägerflüssigkeit und einem Spritzmittel befüllbar und dazu eingerichtet ist, aus der Trägerflüssigkeit und dem Spritzmittel eine Vormischflüssigkeit zu erzeugen;
**gekennzeichnet durch** einen Speichertank (34), welcher mit dem Mischtank (32) verbunden und dazu eingerichtet ist, die in dem Mischtank (32) erzeugte Vormischflüssigkeit zu bevorraten und zur Erzeugung einer auszubringenden Spritzflüssigkeit in eine fluidleitend mit einer oder mehreren Mischkammern (62a-62l) verbindbare Umlaufleitung (48, 48a-48c) abzugeben.

2. Mischsystem (26, 26a-26c) nach Anspruch 1,
**gekennzeichnet durch** eine Mischeinrichtung (36), welche zumindest abschnittsweise in dem Mischtank (32) angeordnet ist.

3. Mischsystem (26, 26a-26c) nach Anspruch 2,
**dadurch gekennzeichnet, dass** die Mischeinrichtung (36) eine Injektordüse (40) und/oder ein Venturirohr (38) umfasst, wobei der Mischtank (32) vorzugsweise dazu eingerichtet ist, über die Injektordüse (40) und/oder das Venturirohr (38) mit der Trägerflüssigkeit und/oder dem Spritzmittel befüllt zu werden.

4. Mischsystem (26, 26a-26c) nach einem der vorstehenden Ansprüche,
**dadurch gekennzeichnet, dass** zwischen dem Mischtank (32) und dem Speichertank (34) ein Befüllventil (42) angeordnet ist, wobei das Befüllventil (42) vorzugsweise als elektromagnetisch betätigtes Ventil oder als mediumbetätigtes Ventil ausgebildet ist.

5. Mischsystem (26, 26a-26c) nach einem der vorstehenden Ansprüche,
**dadurch gekennzeichnet, dass** zwischen dem Mischtank (32) und dem Speichertank (34), vorzugsweise zwischen dem Befüllventil (42) und dem Speichertank (34), ein Zwischenmischer (44), insbesondere ein statischer Zwischenmischer (44), angeordnet ist.

6. Mischsystem (26, 26a-26c) nach einem der vorstehenden Ansprüche, **dadurch gekennzeichnet, dass** das Volumen des Speichertanks (34) größer ist als das Volumen des Mischtanks (32).

7. Mischsystem (26, 26a-26c) nach einem der vorstehenden Ansprüche, **gekennzeichnet durch** eine oder mehrere Fördereinrichtungen (66, 68a-68c), welche dazu eingerichtet sind, den Mischtank (32) mit der Trägerflüssigkeit und/oder dem Spritzmittel zu befüllen.

8. Mischsystem (26, 26a-26c) nach einem der Ansprüche 2 bis 7,
**gekennzeichnet durch** eine Steuerungseinrichtung, welche dazu eingerichtet ist, die Mischeinrichtung (36), das Befüllventil (42) und/oder die eine oder die mehreren Fördereinrichtungen (66, 68a-68c) zu steuern.

9. Landwirtschaftliche Spritzeinrichtung (10), insbesondere Feldspritze, mit
- einem Mischsystem (26, 26a-26c) zur Erzeugung und Bevorratung einer Vormischflüssigkeit;
**dadurch gekennzeichnet, dass** das Mischsystem (26, 26a-26c) nach einem der vorstehenden Ansprüche ausgebildet und der Speichertank (34) des Mischsystems (26, 26a-26c) mit einer oder mehreren Mischkammern (62a-62l) verbunden ist, welche dazu eingerichtet sind, aus der Vormischflüssigkeit eine auszubringende Spritzflüssigkeit zu erzeugen.

10. Landwirtschaftliche Spritzeinrichtung (10) nach Anspruch 9,
**gekennzeichnet durch** eine Umlaufleitung (48, 48a-48c), welche mit dem Speichertank (34) des Mischsystems (26, 26a-26c) verbunden ist, wobei der Speichertank (34) dazu eingerichtet ist, Vormischflüssigkeit in die Umlaufleitung (48, 48a-48c) abzugeben und über die Umlaufleitung (48, 48a-48c) mit Vormischflüssigkeit befüllt zu werden.

11. Landwirtschaftliche Spritzeinrichtung (10) nach Anspruch 9 oder 10,
**dadurch gekennzeichnet, dass** der Mischtank (32), insbesondere über die Mischeinrichtung (36), mit einem Spritzmittelbehälter (24, 24a-24c) und/oder einem Trägerflüssigkeitsbehälter (22) verbunden ist.

12. Landwirtschaftliche Spritzeinrichtung (10) nach einem der Ansprüche 9 bis 11,
**dadurch gekennzeichnet, dass** die eine oder die mehreren Mischkammern (62a-62l) dazu eingerichtet sind, die auszubringende Spritzflüssigkeit aus der Vormischflüssigkeit und der Trägerflüssigkeit zu erzeugen.

13. Verfahren zum Steuern einer landwirtschaftlichen Spritzeinrichtung (10), insbesondere einer Feldspritze, mit den Schritten:
- Befüllen eines Mischtanks (32) mit einer Trägerflüssigkeit und einem Spritzmittel;
- Erzeugen einer Vormischflüssigkeit aus der Trägerflüssigkeit und dem Spritzmittel in dem Mischtank (32);
**gekennzeichnet durch** den Schritt:
- Bevorraten der in dem Mischtank (32) erzeugten Vormischflüssigkeit in einem mit dem Mischtank (32) verbundenen Speichertank (34).

14. Verfahren nach Anspruch 13,
**gekennzeichnet durch** zumindest einen der folgenden Schritte:
- Abgeben der in dem Speichertank (34) bevorrateten Vormischflüssigkeit in eine fluidleitend mit einer oder mehreren Mischkammern (62a-62l) verbindbare Umlaufleitung (48, 48a-48c);
- Erzeugen einer Zirkulation der Vormischflüssigkeit innerhalb der Umlaufleitung (48, 48a-48c);
- Befüllen des Speichertanks (34) mit Vormischflüssigkeit aus der Umlaufleitung (48, 48a-48c).

15. Verfahren nach Anspruch 13 oder 14,
**gekennzeichnet durch** zumindest einen der folgenden Schritte:
- Leiten der Trägerflüssigkeit und/oder des Spritzmittels durch ein Venturirohr (38);
- Einspritzen der Trägerflüssigkeit und/oder des Spritzmittels in den Mischtank (32) mittels einer Injektordüse (40).

16. Verfahren nach einem der Ansprüche 13 bis 15,
**gekennzeichnet durch** zumindest einen der folgenden Schritte:
- Sperren der Fluidverbindung zwischen dem Mischtank (32) und dem Speichertank (34) mittels eines zwischen dem Mischtank (32) und dem Speichertank (34) angeordneten Befüllventils (42);
- Freigeben der Fluidverbindung zwischen dem Mischtank (32) und dem Speichertank (34) mittels des zwischen dem Mischtank (32) und dem Speichertank (34) angeordneten Befüllventils (42);
- Durchmischen der von dem Mischtank (32) zu dem Speichertank (34) fließenden Vormischflüssigkeit mittels eines Zwischenmischers (44).

17. Verfahren nach einem der Ansprüche 13 bis 16,
**gekennzeichnet durch** zumindest einen der folgenden Schritte:
- Fördern von Trägerflüssigkeit von einem Trägerflüssigkeitsbehälter (22) in den Mischtank (32);
- Fördern von Spritzmittel von einem Spritzmittelbehälter (24, 24a-24c) in den Mischtank (32).

18. Verfahren nach einem der Ansprüche 13 bis 17,
**gekennzeichnet durch** zumindest einen der folgenden Schritte:
- Einleiten der Vormischflüssigkeit in eine vor der einen oder den mehreren Spritzdüsen (30) angeordnete Mischkammer (62a-62l);
- Einleiten von Trägerflüssigkeit in die vor der einen oder den mehreren Spritzdüsen (30) angeordnete Mischkammer (62a-62l);
- Erzeugen einer auszubringenden Spritzflüssigkeit aus der Vormischflüssigkeit und der Trägerflüssigkeit innerhalb der Mischkammer (62a-62l).
